# EUROPÄISCHE PATENTANMELDUNG

(11) **EP 2 957 589 A1**
(43) Veröffentlichungstag der Anmeldung: **23.12.2015**
(21) Anmeldenummer: 14172923.6
(22) Anmeldetag: 18.06.2014
(51) Int. Cl.: C08K 3/00, C08L 71/02, C09D 171/02, C09D 5/18

(54) **Brandschutz-Zusammensetzung und deren Verwendung**

(71) Anmelder: HILTI Aktiengesellschaft, 9494 Schaan (LI)
(72) Erfinder: Marauska, Juliane, 72766 Reutlingen (DE); Lang, Martin, 82152 Planegg (DE); Simon, Sebastian, 86807 Buchloe Lindenberg (DE)
(74) Vertreter: Hilti Aktiengesellschaft Corporate Intellectual Property

(57) **Zusammenfassung**

Es wird eine Zusammensetzung beschrieben, die ein Bindemittel auf Basis eines alkoxysilanfunktionalisierten Polymers, das alkoxyfunktionalisierte Silangruppen trägt, enthält. Durch die erfindungsgemäße Zusammensetzung können in einfacher und schneller Weise Beschichtungen mit der für die jeweilige Feuerwiderstandsdauer erforderlichen Schichtdicke aufgetragen werden, wobei die Schichtdicke auf ein Minimum reduziert und dennoch eine gute Brandschutzwirkung erreicht werden kann. Die erfindungsgemäße Zusammensetzung eignet sich besonders für den Brandschutz, insbesondere als Beschichtung von Kabel und Kabeltrassen zur Erhöhung der Feuerwiderstandsdauer.

## Beschreibung

Die vorliegende Erfindung betrifft eine Zusammensetzung, insbesondere eine ablativ wirkende Zusammensetzung, die ein Bindemittel auf Basis eines alkoxysilanfunktionalisierten Polymers, das alkoxyfunktionalisierte Silangruppen trägt, enthält, sowie deren Verwendung für den Brandschutz, insbesondere für die Beschichtung von Bauteilen, wie Stützen, Trägern, Fachwerkstäben, Dämmsystemen, z.B. Weichschotts, Kabel, Kabelbündeln oder Kabeltrassen zur Erhöhung der Feuerwiderstandsdauer.

Bei Bränden bilden Kabeltrassen aus mehreren Gründen besondere Gefahrenstellen. Zum einen tritt bei Bränden von mit Kunststoff isolierten Kabeln eine intensive Rauchentwicklung unter Emission schädlicher, z.T. giftiger Stoffe auf. Zum anderen kann sich entlang von Kabeltrassen ein Brand schnell ausbreiten und der Brand unter Umständen an eine vom ursprünglichen Brandherd weit entfernte Stelle gleitet werden. Bei Kabelanlagen besteht ferner das Problem, dass bei diesen Kabeln durch thermische Einwirkung oder Abbrand die Wirkung der Isolation nachlässt und durch Kurzschluss eine Unterbrechung des Stromflusses auftreten kann und damit die Kabel zerstört, bzw. funktionsuntüchtig werden.

Elektrische Kabel und Leitungen werden häufig in Fluren verlegt und von dort in die angrenzenden Räume unterteilt. Diese Flure dienen im Brandfall als Flucht- und Rettungswege, die bei Bränden von Kabelinstallationen durch Rauchentwicklung und toxische Brandgase unbenutzbar werden, wobei z. B. brennendes PVC stark korrosive Gase freisetzt. Kabelmassierungen stellen somit insbesondere im Industriebau, in Kraftwerksanlagen, in Krankenhäusern, Groß- und Verwaltungsbauten und generell in Gebäuden- mit hoher Installationsdichte ein erhebliches Gefahrenpotential dar. Die Kabelisolierungen sind in diesen Gebäuden oft die maßgebliche Brandlast und verursachen lang andauernde Brände mit Brandraumtemperaturen in ungünstigsten Fällen bis über 1000°C. Aus den genannten Gründen ist Kabeltrassen in Bezug auf Brandschutzmaßnahmen besondere Beachtung zu schenken.

Um diese Gefährdungen der fehlenden Funktionsfähigkeit der Kabel und der starken Brandlasterhöhung durch die Kabel zumindest zeitlich begrenzt zu verhindern, ist es bekannt, die Kabel durch unbrennbare Baustoffe der Baustoffklasse A1 oder A2 räumlich zu trennen, in dem die Kabel z.B. in Installations- und/oder Funktionserhaltkanälen verlegt werden. Dieses erfordert jedoch einen hohen Arbeitsaufwand. Zusätzlich entsteht ein hoher Raumbedarf durch aufwändige Konstruktionen, die zusätzlich zum Gewicht der Kabeltrasse noch das Gewicht der Installations- und/oder Funktionserhaltkanäle berücksichtigen müssen. Dazu werden häufig Kabel und Kabeltrassen mit isolierenden Materialien umwickelt, wie Aluminiumoxid-Silika-Matten oder Mineralwollmatten. Um einen ausreichenden Brandschutz zu erreichen, muss das Material sehr dick sein. Dies führt jedoch zu Problemen hinsichtlich der Abstände zwischen dem geschützten Gegenstand und benachbarten oder überlagerten Gegenständen. Darüber hinaus verursachen diese Materialien aufgrund ihrer thermischen Isoliereigenschaften Probleme bei Normalbetrieb. Eines dieser Probleme wird als "Herabsetzung der Strombelastbarkeit" bezeichnet. Dies bedeutet, dass die durch elektrische Kabel in dem Kabelrohr oder der Kabeltrasse erzeugte Wärme im Bereich der Isolierung nicht mehr abgeführt werden kann, was dazu führt, dass der in diesen Kabeln zulässige sichere Strombetriebspegel verringert wird oder dass eine Überhitzung der Kabel erfolgt. Diese Nachteile machen diese Art des Brandschutzes sehr unflexibel hinsichtlich deren Einsatzbereichs.

Zur Vermeidung dieser Nachteile ist es auch bekannt, für den Schutz elektrischer Kabel Beschichtungen aufzubringen, die im Brandfall unter thermischer Einwirkung intumeszieren, d.h. aufschäumen und so eine Dämmschicht bilden oder die durch physikalische und chemische Prozesse Wärme aufnehmen und so kühlend wirken.

Mit dämmschichtbildenden Beschichtungen ist es möglich, die Teilnahme von Kabeln am Brandgeschehen für 30 Minuten oder länger zu verhindern. Derartige beschichtete Kabel werden oft auf Kabeltrassen verlegt. Hierbei hat es sich jedoch gezeigt, dass bei vertikaler oder geneigter Anordnung der Kabeltrassen auch ein vollständig aufgeschäumter Dämmschichtbildner die Brandausbreitung ohne zusätzliche Maßnahmen nicht verhindern kann. Während der Erwärmung verformen sich die Kabel zwischen den Kabelschellen so stark, dass die Dämmschicht bildende Beschichtung aufreißt und teilweise abplatzt. Entstehender Schaum löst sich dabei ebenfalls von den Kabeln und fällt ab. Bei nach Verlegung der Kabel erfolgter Beschichtung sind die Kabel im Bereich der Schellenkonstruktionen nicht in vollem Umfang zugänglich. Dies hat zur Folge, dass bei vertikaler oder geneigter Anordnung der Kabeltrassen im Brandfall im Bereich der Schellenkonstruktionen nur ein Schaum geringer Dicke entsteht, der als Brandschutz für 30 Minuten nicht mehr ausreicht. Bei Verlegung von PVC-Kabeln treten daher wieder die im Brandfall bekannten Probleme auf.

Es ist auch bekannt, flammwidrig bzw. schwer entflammbar ausgerüstete halogenfreie Kabel zu verwenden, die nur schwer entflammbar und raucharm sind und nur eine geringe Brandweiterleitung besitzen. Diese Kabel sind jedoch sehr teuer und kommen daher nur unter extrem gefährdeten Bedingungen zum Einsatz.

Zur Vermeidung der Nachteile dämmschichtbildender Beschichtungen wurden bei Kabeltrassen Materialen auf die Kabel und Kabelhalterungen aufgebracht, die einen Ablationseffekt zeigen, d.h. unter Hitzeeinwirkung kühlend wirken und keramisieren, wie beispielsweise in der DE 196 49 749 A1 beschrieben. Hierin wird ein Verfahren zur Ausbildung eines Brandschutzes für brennbare oder hitzegefährdete Bauteile beschrieben, wobei die Bauteile mit einer Beschichtung versehen werden, die als Bindemittel ein anorganisches Material aus feingemahlenen hydraulischen Bindemitteln wie Calcium-Silicat, -Aluminat oder -Ferrit enthält, dem Ablativstoffe wie Aluminium- oder MagnesiumHydroxid zugesetzt ist. Nachteil an dieser Maßnahme ist, dass einerseits das Aufbringen des den Ablationseffekt zeigenden Materials zeitintensiv ist und andererseits die Haftung des Materials an den Kabeln und den Kabelhalterungen ein Problem darstellt.

Andere derzeit auf dem Markt befindlichen Beschichtungssysteme, welche einige der oben erwähnten Nachteile nicht aufweisen sind einkomponentige Beschichtungszusammensetzungen auf der Basis von Polymerdispersionen, die sich endotherm zersetzende Verbindungen enthalten. Nachteilig an diesen Beschichtungen ist zum einen die relativ lange Trocknungsdauer der Beschichtung und damit einhergehende geringe Trockenschichtdicke, da diese Systeme physikalisch, d.h. durch Verdunstung des Lösungsmittels trocknen. Daher sind für dickere Beschichtungen mehrere nacheinander folgende Auftragungen erforderlich, was diese Systeme ebenfalls zeit- und arbeitsintensiv und daher unwirtschaftlich macht.

Der Erfindung liegt daher die Aufgabe zugrunde, ein ablativ wirkendes Beschichtungssystem der eingangs erwähnten Art zu schaffen, das die genannten Nachteile vermeidet, das insbesondere nicht lösemittel- oder wasserbasiert ist und eine schnelle Aushärtung aufweist, aufgrund entsprechend abgestimmter Viskosität einfach aufzutragen ist und aufgrund des erreichbaren hohen Füllgrades nur eine geringe Schichtdicke erfordert.

Diese Aufgabe wird durch die Zusammensetzung nach Anspruch 1 gelöst. Bevorzugte Ausführungsformen sind den Unteransprüchen zu entnehmen.

Gegenstand der Erfindung ist demnach eine Brandschutz-Zusammensetzung mit einem alkoxysilanfunktionellen Polymer, welches terminiert und/oder als Seitengruppen entlang der Polymerkette alkoxyfunktionelle Silangruppen der allgemeinen Formel (I) enthält

-Si(R¹)ₘ(OR²)₃₋ₘ (I),

worin R¹ für einen linearen oder verzweigten C₁-C₁₆-Alkylrest, bevorzugt für einen Methyl-oder Ethylrest, R² für einen linearen oder verzweigten C₁-C₆-Alkylrest und m für eine ganze Zahl von 0 bis 2 steht, und mit mindestens einem ablativ wirkenden Brandschutzadditiv.

Erfindungsgemäß ist ein Polymer ein Molekül mit sechs oder mehr Wiederholungseinheiten, das eine Struktur aufweisen kann, die linear, verzweigt, sternförmig, gewunden, hyperverzweigt oder vernetzt sein kann. Polymere können eine einzelne Art von Wiederholungseinheiten aufweisen ("Homopolymere") oder sie können mehr als eine Art von Wiederholungseinheiten aufweisen ("Copolymere"). Wie hierin verwendet, umfasst der Begriff *"Polymer"* sowohl Präpolymere, welche auch Oligomere mit 2 bis 5 Wiederholungseinheiten umfassen können, wie die eingesetzten alkoxysilanfunktionellen Verbindungen, welche in Gegenwart von Wasser unter Bildung von Si-O-Si-Bindungen miteinander reagieren, als auch die durch die eben genannte Reaktion gebildeten polymeren Verbindungen.

Durch die erfindungsgemäße Zusammensetzung können in einfacher und schneller Weise Beschichtungen mit der für die jeweilige Feuerwiderstandsdauer erforderlichen Schichtdicke aufgetragen werden. Die durch die Erfindung erreichten Vorteile sind im Wesentlichen darin zu sehen, dass im Vergleich zu den Systemen auf Lösemittel- oder Wasserbasis mit ihren inhärenten langsamen Aushärtezeiten die Arbeitszeit erheblich reduziert werden kann.

Ein weiterer Vorteil liegt darin, dass die erfindungsgemäße Zusammensetzung einen hohen Füllgrad mit den Brandschutzadditiven aufweisen kann, so dass selbst mit dünnen Schichten eine große isolierende Wirkung erreicht wird. Der mögliche hohe Füllgrad der Zusammensetzung kann selbst ohne die Verwendung von leicht flüchtigen Lösungsmitteln erreicht werden. Dementsprechend sinkt der Materialaufwand, was sich insbesondere beim großflächigen Auftragen günstig auf die Materialkosten auswirkt. Erreicht wird dies insbesondere durch die Nutzung eines reaktiven Systems, das nicht physikalisch trocknet, sondern chemisch über eine Additionsreaktion härtet. Damit erleiden die Zusammensetzungen keinen Volumenverlust durch das Abtrocknen von Lösemitteln oder bei wasserbasierten Systemen von Wasser. So ist bei einem klassischen System ein Lösemittelgehalt von etwa 25% typisch. Dies bedeutet, dass aus einer 10 mm-Nassfilmschicht nur 7,5 mm als eigentliche Schutzschicht auf dem zu schützenden Substrat verbleiben. Bei der erfindungsgemäßen Zusammensetzung verbleiben mehr als 95% der Beschichtung auf dem zu schützenden Substrat.

Im Brandfall erweicht das Bindemittel und die darin erhaltenen Brandschutzadditive zersetzen sich abhängig von den verwendeten Additiven in einer endothermen physikalischen oder chemischen Reaktion unter Bildung von Wasser und inerten Gasen, was zum einen zur Kühlung der Kabel und zum anderen zur Verdünnung der brennbaren Gase oder durch Ausbilden einer Schutzschicht, die das Substrat vor Wärme- und Sauerstoffangriff schützt, führt und zum anderen die Ausbreitung des Feuers durch den Abbrand der Beschichtung verhindert.

Die erfindungsgemäßen Zusammensetzungen zeigen eine ausgezeichnete Haftung an unterschiedlichen Untergründen verglichen mit lösemittel- oder wasserbasierten Systemen, wenn diese ohne Grundierung aufgetragen werden, so dass sie universell eingesetzt werden können und nicht nur an den zu schützenden Leitungen sondern auch anderen Trägermaterialien haften.

Erfindungsgemäß umfasst das alkoxysilanfunktionelle Polymer ein Grundgerüst, das aus der Gruppe, bestehend aus einem Polyether, Polyester, Polyetherester, Polyamid, Polyurethan, Polyesterurethan, Polyetherurethan, Polyetheresterurethan, Polyamidurethan, Polyharnstoff, Polyamin, Polycarbonat, Polyvinylester, Polyacrylat, Polyolefin, wie Polyethylen oder Polypropylen, Polyisobutylen, Polysulfid, Kautschuk, Neopren, Phenolharz, Epoxidharz, Melamin ausgewählt ist. Das Grundgerüst kann dabei linear oder verzweigt (lineares Grundgerüst mit Seitenketten entlang der Kette des Grundgerüstes) aufgebaut sein und enthält terminierend, d.h. als Endgruppen eines linearen Grundgerüstes bzw. als Endgruppen des linearen Grundgerüstes und als Endgruppen der Seitengruppen, alkoxyfunktionelle Silangruppen, bevorzugt mindestens zwei alkoxyfunktionelle Silangruppen.

Die alkoxyfunktionelle Silangruppe hat die allgemeinen Formel (I)

-Si(R¹)ₘ(OR²)₃₋ₘ (I),

worin R¹ für einen linearen oder verzweigten C₁-C₁₆-Alkylrest, bevorzugt für einen Methyl-oder Ethylrest, R² für einen linearen oder verzweigten C₁-C₆-Alkylrest, bevorzugt für einen Methyl- oder Ethylrest, und m für eine ganze Zahl von 0 bis 2, bevorzugt 0 oder 1 steht. Am stärksten bevorzugt sind die mindestens zwei alkoxyfunktionellen Silangruppen di-(m = 1) oder trifunktionell (m = 0) und die Alkoxygruppe ist eine Methoxy- oder Ethoxygruppe.

Die alkoxyfunktionelle Silangruppe ist über eine Linkergruppe an das Grundgerüst gebunden. Es kann sich um sogenannte α-Silane (aktiviert durch den α-Effekt) oder um γ-Silane oder um andersartige Silane handeln.

Beispiele geeigneter Polymere umfassen silanterminierte Polyether (z.B. Geniosil® STP-E 10, Geniosil® STP-E 15, Geniosil® STP-E 30, Geniosil® STP-E 35, Geniosil® XB 502, Geniosil® WP 1 von Wacker Chemie AG, Polymer ST61, Polymer ST75 und Polymer ST77 von Evonik Hanse) und silanterminierte Polyurethane (Desmoseal® S XP 2458, Desmoseal® S XP 2636, Desmoseal® S XP 2749, Desmoseal® S XP 2821 von Bayer, SPUR+*1050MM, SPUR+*1015LM, SPUR+* 3100HM, SPUR+* 3200HM von Momentive), oder SAX350, S203H, S303H, oder SAX400 von Kaneka.

Die Viskosität dieser alkoxysilanfunktionellen Polymere liegt bevorzugt zwischen 0,1 und 50.000 Pa·s, stärker bevorzugt zwischen 0,5 und 35.000 Pa·s und am stärksten bevorzugt zwischen 0,5 und 30.000 Pa·s.

Die Viskosität wurde mit einem Kinexus Rotationsrheometer durch Messung einer Fließkurve bei 23°C bestimmt, bei den angegebenen Werten handelt es sich um den Messwert bei 215 s⁻¹.

Als alternative Polymere können bevorzugt solche verwendet werden, bei denen die alkoxyfunktionellen Silangruppen nicht terminal in das Gerüst des Polymers eingebaut werden, sondern gezielt seitenständig verteilt über die Kette des Grundgerüstes. Über die eingebauten mehreren Vernetzungseinheiten können wichtige Eigenschaften, wie die Vernetzungsdichte, gesteuert werden. Als geeignetes Beispiel kann hier die Produktlinie TEGOPAC® der Evonik Goldschmidt GmbH genannt werden, wie TEGOPAC BOND 150, TEGOPAC BOND 250 und TEGOPAC SEAL 100. In diesem Zusammenhang wird beispielhaft auf die DE 102008000360 A1, die DE 102009028640 A1, die DE102010038768 A1 und die DE 102010038774 A1 und verwiesen.

Gewöhnlich trägt bei diesen alkoxysilanfunktionellen Polymeren das Polymer 2 bis 8 alkoxysilanfunktionelle Silangruppen pro Präpolymer-Molekül.

Je nach Kettenlänge des Grundgerüstes, Alkoxyfunktionalität des Polymers und Sitz der alkoxyfunktionellen Silangruppen können der Vernetzungsgrad des Bindemittels und somit sowohl die Festigkeit der entstehenden Beschichtung als auch deren elastische Eigenschaften eingestellt werden.

Gewöhnlich beträgt die Menge des Bindemittels 5 bis 60 Gew.-%, bevorzugt 5 bis 50 Gew.-%, stärker bevorzugt 10 bis 40 Gew.-%, bezogen auf die Zusammensetzung.

Die Wirkungsweise der erfindungsgemäßen ablativ wirkenden Zusammensetzung baut auf einer endothermen physikalischen und/oder chemischen Reaktion auf, wobei Stoffe, die bei deren Zersetzung große Mengen von Energie benötigen, in der Zusammensetzung enthalten sind. Wird die ausgehärtete Zusammensetzung erhöhter Temperatur, wie etwa im Brandfall der eines Feuers ausgesetzt, wird eine Reihe von chemischen und physikalischen Prozessen in Gang gesetzt. Diese Prozesse sind etwa die Freisetzung von Wasserdampf, Veränderung der chemischen Zusammensetzung und die Bildung nichtbrennbarer Gase, die den zur Verbrennung notwendigen Sauerstoff von der Kabeloberfläche fernhalten. All diese Prozesse benötigen eine große Menge Energie, die dem Feuer entzogen wird. Nachdem die Umwandlung aller organischen Bestandteile abgeschlossen ist, hat sich eine stabile Isolationsschicht aus anorganischen Bestandteilen gebildet, die eine zusätzliche isolierende Wirkung hat.

Erfindungsgemäß enthält die Zusammensetzung daher mindestens ein ablativ wirkendes Brandschutzadditiv, wobei als Additive sowohl einzelne Verbindungen als auch ein Gemisch von mehreren Verbindungen verwendet werden kann. Hierbei bedeutet *"ablativ wirkend",* dass bei Einwirken erhöhter Temperaturen, d.h. oberhalb von 200°C, wie sie etwa im Brandfall auftreten können, eine Reihe von chemischen und physikalischen Reaktionen erfolgen, die Energie in Form von Wärme benötigen, wobei diese Energie der Umgebung entzogen wird. Dieser Begriff wird gleichbedeutend mit dem Begriff *"endotherm zersetzend"* verwendet.

Zweckmäßig werden als ablativ wirkende Brandschutzadditive solche Materialien eingesetzt, die durch Wasserabspaltung, das etwa in Form von Kristallwasser eingelagert ist, und Wasserverdampfung energieverzehrende Schichten bilden. Die Wärmeenergie, die zur Abspaltung des Wassers aufgewendet werden muss, wird dabei dem Brand entzogen. Ferner werden solche Materialien eingesetzt, die sich bei Hitzeeinwirkung in einer endothermen Reaktion chemisch verändern bzw. zersetzen, verdampfen, sublimieren oder schmelzen. Dadurch werden die beschichteten Substrate gekühlt. Häufig werden bei der Zersetzung inerte, d.h. nicht brennbare Gase wie etwa Kohlendioxid freigesetzt, welche zusätzlich den Sauerstoff in unmittelbarer Umgebung des beschichteten Substrates verdünnen.

Als gasabspaltende Bestandteile eignen sich Hydroxide, wie Aluminiumhydroxid und Magnesiumhydroxid sowie deren Hydrate, die Wasser abspalten, sowie Carbonate, wie Calciumcarbonat, die Kohlendioxid abspalten. Basische Carbonate können sowohl Wasser als auch CO₂ abspalten. Bevorzugt ist eine Kombination von bei verschiedenen Temperaturen mit der Gasabspaltung beginnenden Bestandteilen. So beginnt die Wasserabspaltung bei Aluminiumhydroxid bereits bei ca. 200°, wogegen die Wasserabspaltung von Magnesiumhydroxid bei ca. 350° einsetzt, so dass die Gasabspaltung über einen größeren Temperaturbereich hinweg erfolgt.

Geeignete ablativ wirkende Materialien sind, bei Hitzeeinwirkung wasserabgebende anorganische Hydroxide oder Hydrate, wie solche von Natrium, Kalium, Lithium, Barium, Calcium, Magnesium, Bor, Aluminium, Zink, Nickel, ferner Borsäure und deren teilentwässerte Derivate.

Beispielhaft können folgende Verbindungen genannt werden: LiNO₃·3H₂O, Na2CO3H2O (Thermonatrit), Na₂CO₃·7H₂O, Na₂CO₃·10H₂O (Soda), Na₂Ca(CO₃)₂·2H₂O (Pirssonit), Na₂Ca(CO₃)₂·5H₂O (Gaylussit), Na(HCO₃)Na₂CO₃·2H₂O (Trona), Na₂S₂O₃·5H₂O, Na₂O₃Si·5H₂O, KF·2H₂O, CaBr₂·2H₂O, CaBr₂·6H₂O, CaSO₄·2H₂O (Gips), Ca(SO₄)·½H₂O (Bassanit), Ba(OH)₂·8H₂O, Ni(NO₃)₂·6H₂O, Ni(NO₃)₂·4H₂O, Ni(NO₃)₂·2H₂O, Zn(NO₃)₂·4H₂O, Zn(NO₃)₂·6H₂O, (ZnO)₂(B₂O₃)₂·3H₂O, Mg(NO₃)₂·6H₂O (US 5985013 A), MgSO₄·7H₂O (EP1069172A), Mg(OH)₂, Al(OH)₃, Al(OH)₃·3H₂O, AIOOH (Böhmit), Al₂[SO₄]₃·H₂O mit n = 14 - 18 (US 4,462,831 B), gegebenenfalls im Gemisch mit AlNH₄(SO₄)₂·12H₂O (US5104917A), KAl(SO₄)₂·12H₂O (EP1069172A), CaO·Al₂O₃·10H₂O (Nesquehonit), MgCO₃·3H₂O (Wermlandit), Ca₂Mg₁₄(Al,Fe)₄CO₃(OH)₄₂·29H₂O (Thaumasit), Ca₃Si(OH)₆(SO₄)(CO₃)·12H₂O (Artinit), Mg₂(OH)₂CO₃·H₂O (Ettringit), 3CaO·Al₂O₃·3CaSO₄·32H₂O (Hydromagnesit), Mg₅(OH)₂(CO₃)₄·4H₂O (Hydrocalumit), Ca₄Al₂(OH)₁₄·6H₂O (Hydrotalkit), Mg₆Al₂(OH)₁₆CO₃·4H₂O Alumohydrocalcit, CaAl₂(OH)₄(CO₃)₂·3H₂O Scarbroit, Al₁₄(CO₃)₃(OH)₃₆ Hydrogranat, 3CaO·Al₂O₃·6H₂O Dawsonit, NaAl(OH)CO₃, wasserhaltige Zeolithe, Vermikulite, Colemanit, Perlite, Glimmer, Alkalisilikate, Borax, modifizierte Kohlen und Graphite, Kieselsäuren.

In einer bevorzugten Ausführungsform sind die hydrierten Salze ausgewählt aus der Gruppe bestehend aus Al₂(SO₄)·16-18H₂O, NH₄Fe(SO₄)₂·12H₂O, Na₂B₄O₇·10H₂O, NaAl(SO₄)₂·12H₂O, AlNH₄(SO₄)₂·12-24H₂O, Na₂SO₄·10H₂O, MgSO₄·7H₂O, (NH₄)₂SO₄·12H₂O, KAl(SO₄)₂·12H₂O, Na₂SiO₃·9H₂O, Mg(NO₂)₂·6H₂O, Na₂CO₃·7H₂O und Gemischen davon (EP1069172A).

Besonders bevorzugt sind Aluminiumhydroxid, Aluminiumhydroxidhydrate, Magnesiumhydroxid und Zinkborat, da sie eine Aktivierungstemperatur unterhalb 180°C haben.

Optional können der erfindungsgemäßen Zusammensetzung ein oder mehrere reaktive Flammhemmer zugesetzt werden. Derartige Verbindungen werden in das Bindemittel eingebaut. Ein Beispiel im Sinne der Erfindung sind reaktive Organophosphorverbindungen, wie 9,10-Dihydro-9-oxa-10-phosphaphenanthren-10-oxid (DOPO) und dessen Derivate und Addukte. Solche Verbindungen sind beispielsweise beschrieben in S. V Levchik, E. D Weil, Polym. Int. 2004, 53, 1901-1929 oder E. D. Weil, S. V. Levchik (Hrsg.), Flame Retardants for Plastics and Textiles - Practical Applications, Hanser, 2009.

Das ablativ wirkende Brandschutzadditiv kann in einer Menge von 5 bis 99 Gew.-% in der Zusammensetzung enthalten sein, wobei die Menge im Wesentlichen von der Applikationsform der Zusammensetzung (Sprühen, Pinseln und dergleichen) abhängt. Um eine möglichst gute Isolation zu bewirken, wird der Anteil des ablativ wirkenden Brandschutzadditivs in der Gesamtformulierung so hoch wie möglich eingestellt. Bevorzugt beträgt der Anteil des ablativ wirkenden Brandschutzadditivs in der Gesamtformulierung 5 bis 85 Gew.-% und besonders bevorzugt 40 bis 80 Gew.-%.

In einer bevorzugten Ausführungsform enthält die Zusammensetzung ein oder mehrere Vernetzungsmittel als weiteren Bestandteil.

Bevorzugt ist das Vernetzungsmittel ein vinylfunktionelles Alkoxysilan, ein oligomeres amino-/alkylfunktionelles Alkoxysilan, ein oligomeres aminofunktionelles Alkoxysilan, ein aminofunktionelles Alkoxysilan, ein alkylfunktionelles Alkoxysilan, ein epoxyfunktionelles Alkoxysilan, ein vinylfunktionelles Alkoxysilan, ein vinyl-/alkylfunktionelles Alkoxysilan, ein mercaptofunktionelles Alkoxysilan, ein methacrylfunktionelles Alkoxysilan oder ein Kieselsäureester.

Beispiele geeigneter Vernetzungsmittel sind Methyltrimethoxysilan, Chlormethyltrimethoxysilan, Ethyltrimethoxysilan, Propyltrimethoxysilan, Vinyltrimethoxysilan, Methyltriethoxysilan, Vinyltriethoxysilan, Phenyltriethoxysilan, Methyltripropoxysilan, Phenyltripropoxysilan, Tetramethoxysilan, Tetraethoxysilan, Tetra-n-propoxysilan, Tetra-n-butoxysilan, Methyltris(methylethylketoxim)silan, Phenyltris(methylethylketoxim)silan, Vinyltris(methylethylketoxim)silan, Methyltris(methylisobutylketoxim)silan, Methyltris(methylpropylketoxim)silan oder Tetra(methylethylketoxim)silan, Aminopropyltrimethoxysilan, Aminopropyltriethoxysilan, Aminopropylmethyldimethoxysilan, Aminopropylmethyldiethoxysilan, N-(2-Aminoethyl)-aminopropyltrimethoxysilan, *N*-(2-Aminoethyl)aminopropyltrimethoxysilan, *N*-(2-Aminoethyl)-aminopropyltriethoxysilan, N-(2-Aminoethyl)-aminopropylmethyldimethoxysilan, *N*-Cyclohexylaminomethyltriethoxysilan, *N*-Cyclohexylaminomethyl-methyldiethoxysilan, *N*-Cyclohexylaminomethyl-trimethoxysilan, *N-*Cyclohexylaminomethy1-methyldimethoxysilan, Hexadecyltrimethoxysilan, *iso-*Butyltriethoxysilan, *iso*-Butyltrimethoxysilan, Octyltrichlorosilan, Octyltriethoxysilan, Propyltriethoxysilan, , Bis(3-triethoxysilylpropyl)amin, Bis(3-trimethoxysilylpropyl)amin, 3-3-2-Aminoethyl-3-amino-propylmethyldimethoxysilan, 2-Aminoethyl-3-amino-propyltrimethoxysilan, 3-Glycidyloxypropyltriethoxysilan, 3-Glycidyloxypropyltrimethoxysilan, 3-Mercaptoprobyltrimethoxysilan, 3-Methacryloxypropyltrimethoxysilan, Methacryloxymethyl-methyldimethoxysilan, Methacryloxymethyl-timethoxysilan, 3-Methacryloxypropyltriacetoxysilan, Ethylpolysilicat, Tetraethylorthosilicat, Tetramethylorthosilicat, Tetra-*n*-Propylorthosilicat, Vinyltrichlorsilan, Vinyltriacetoxysilan, Vinyltris(2-methoxyethoxy)silan, Cyclohexyl-3-aminopropyltrimethoxysilan, *N*-(2-Aminoethyl)-3-aminopropyltrimethoxysilan, 3-(2-Aminomethylamino)propyltriethoxysilan, N-(2-Aminoethyl)-3-amino-prolymmethyldimethoxysilan, 3-Ureidopropyltrimethoxysilan, N-Methyl[3-(Trimethoxysilyl)propyl]carbamat, *N*-Trimethoxysilylmethyl-*O*-methylcarbamat, *N-*Dimethoxy(methyl)silyl-methyl-O-methylcarbamat, Tris-[3-(trimethoxysilyl)propyl]-isocyanurat oder Kombinationen aus diesen.

Kommerziell erhältliche Beispiele hierfür sind: Dynasylan® 1146, Dynasylan® 6490, Dynasylan® 6498, Dynasylan® SIVO 210, Dynasylan® SIVO 214, Dynasylan® 9116, Dynasylan® IBTEO, Dynasylan® IBTMO, Dynasylan® MTES, Dynasylan® MTMS, Dynasylan® OCTCS, Dynasylan® OCTEO, Dynasylan® OCTMO, Dynasylan® PTEO, Dynasylan® PTMO, Dynasylan® 1122, Dynasylan® 1124, Dynasylan® 1133, Dynasylan® 1204, Dynasylan® 1505, Dynasylan® 1506, Dynasylan® AMEO, Dynasylan® AMEO-T, Dynasylan® AMMO, Dynasylan® 1411, Dynasylan® DAMO, Dynasylan® DAMO-T, Dynasylan® GLYEO, Dynasylan® GLYMO, Dynasylan® MTMO, Dynasylan® MEMO, Dynasylan® 40, Dynasylan® A, Dynasylan® M, Dynasylan® P, Dynasylan® VTC, Dynasylan® VTEO, Dynasylan® VTMO, Dynasylan® VTMOEO, Dynasylan® 6598 (jeweils der Evonik Industries AG), Geniosil® GF9, Geniosil® GF 91, Geniosil® GF 92, Geniosil® XL 926, Geniosil® GF 93, Geniosil® GF 94, Geniosil® GF 95, Geniosil® GF 96, Geniosil® GF 98, Geniosil® XL 10, Geniosil® XL 12, Geniosil® GF 56, Geniosil® GF 62, Geniosil® GF 31, Geniosil® XL 32, Geniosil® XL 33, Geniosil® GF 39, Geniosil® GF 60, Geniosil® XL 63, Geniosil® XL 65, Geniosil® GF 69, Geniosil® GF 80 und Geniosil® GF 82 (jeweils der Wacker Chemie AG).

Vernetzungsmittel sind bevorzugt in einer Menge von 0,05 bis 5,0 Gew.-%, bezogen auf die gesamte Zusammensetzung, stärker bevorzugt von 0,1 bis 3,0 Gew.-% und am stärksten bevorzugt von 0,5 bis 2,0 Gew.-%, enthalten.

Durch das Vernetzungsmittel können verschiedene Eigenschaften, wie Haftung zum Untergrund, bessere Benetzung der Additive und Aushärtungsgeschwindigkeit der Zusammensetzung gezielt optimiert und maßgeschneidert werden.

Weiterhin können die Vernetzungsmittel auch bereits teilweise oder vollständig hydrolysiert vorliegen. Aufgrund der stark erhöhten Reaktivität von teilweise oder vollständig hydrolysierten Silanen kann ihr Einsatz als Vernetzungsmittel vorteilhaft sein. Dem Fachmann ist dabei bekannt, dass es beim Einsatz von teilweise oder vollständig hydrolysierten Silanen zur Bildung von oligomeren Siloxanen, insbesondere zu Dimeren und/oder Trimeren, kommen kann, welche durch Kondensation von hydrolysierten Silanen gebildet werden.

Besonders bevorzugte oligomere Siloxane sind beispielsweise Hexamethoxydisiloxan, Hexaethoxydisiloxan, Hexa-n-propoxydisiloxan, Hexa-n-butoxydisiloxan, Octaethoxytrisiloxan, Octa-n-butoxytrisiloxan, Decaethoxytetrasiloxan.

Selbstverständlich können als Vernetzungsmittel für die Organopolysiloxane auch beliebige Mischungen der vorhergehend genannten Silane eingesetzt werden.

In einer bevorzugten Ausführungsform enthält die Zusammensetzung ein oder mehrere Co-Vernetzungsmittel als weiteren Bestandteil. Das Co-Vernetzungsmittel kann dabei aus der Gruppe an Vernetzungsmittel, wie sie oben beschrieben ist, oder Wasser ausgewählt werden, wobei Wasser als Co-Vernetzungsmittel besonders bevorzugt ist. Hierdurch kann eine homogenere und schnellere Durchhärtung des Bindemittels erreicht werden. Die Aushärtung der Zusammensetzung wird somit weitgehend unabhängig von der absoluten Luftfeuchtigkeit und die Zusammensetzung härtet auch unter extrem trockenen Bedingungen zuverlässig und schnell aus.

Der Gehalt an Co-Vernetzungsmittel, bevorzugt Wasser, in der Zusammensetzung kann bis zu 5 Gew.-%, bezogen auf das Polymer, betragen, wobei ein Gehalt im Bereich zwischen 0,1 und 5 Gew.-% bevorzugt, zwischen 0,5 und 3 Gew.-% stärker bevorzugt und zwischen 0,6 und 2 Gew.-% noch stärker bevorzugt ist.

In einer Ausführungsform enthält die erfindungsgemäße Zusammensetzung ferner mindestens einen weiteren Bestandteil, ausgewählt unter Weichmachern, Wasserfängern, organischen und/oder anorganischen Zuschlagstoffen und/oder weiteren Additiven enthält.

Der Weichmacher hat die Aufgabe, das ausgehärtete Polymernetzwerk weich zu machen. Ferner hat der Weichmacher die Aufgabe, eine zusätzliche flüssige Komponente einzubringen, so dass die Füllstoffe vollständig benetzt werden und die Viskosität so eingestellt wird, dass die Beschichtung verarbeitungsfähig wird. Der Weichmacher kann in solch einer Menge in der Zusammensetzung enthalten sein, dass er die eben beschriebenen Funktionen hinreichend erfüllen kann.

Geeignete Weichmacher sind unter Derivaten der Benzoesäure, Phthalsäure, z.B. Phthalate, wie Dibutyl-, Dioctyl-, Dicyclohexyl-, Düsooctyl-, Düsodecyl-, Dibenzyl- oder Butylbenzylphthalat, Trimellitsäure, Pyromellitsäure, Adipinsäure, Sebacinsäure, Fumarsäure, Maleinsäure, Itaconsäure, Caprylsäure und Zitronensäure, Alkylphosphatestern und Derivaten von Polyestern und Polyethern, epoxidierten Ölen, C₁₀-C₂₁-Alkylsulfonsäureestern des Phenols, Polyestern, erhältlich aus linearen oder verzweigten, gesättigten oder ungesättigten C₆-C₂₁-Monocarbonsäuren und multifunktionellen Alkoholen bzw. deren ethoxylierten Derivaten, und alicyclischen Carbonsäureestern ausgewählt. Bevorzugt ist der Weichmacher ein Esterderivat der Terephthalsäure, ein Triol-Ester der Caprylsäure, ein Glykoldiester, Diol-Ester aliphatischer Dicarbonsäuren, Esterderivat der Zitronensäure, sekundärer Alkylsulfonsäureester, Esterderivate des Glycerins mit Epoxidgruppen und Esterderivate der Phosphate. Am stärksten bevorzugt ist der Weichmacher Bis(2-ethylhexyl)terephthalat, Trihydroxymethylpropylcaprylat, Triethylenglycol-bis(2-ethylhexanoat), 1,2-Cyclohexandicarboxylsäure-diisononylester, ein Gemisch aus 75-85 % sekundärer Alkylsulfonsäureester, 15-25 % sekundärer Alkandisulfonsäurediphenylester sowie 2-3 % nicht sulfonierter Alkane, Triethylcitrat, epoxidiertes Sojabohnenöl, Tri-2-ethylhexylphosphat oder ein Gemisch aus n-Octyl- und n-Decylsuccinat.

Kommerziell erhältliche Beispiele für Weichmacher sind Eastman® DOTP Plasticizer (Eastman Chemical Company), Esterex® NP 343 (Excon Mobil Corporation), Solusolv® 2075 (Solutia Inc.), Hexamoll® DINCH (BASF SE), Mesamoll® II (Lanxess Deutschland GmbH), Triethylcitrat (Sigma Aldrich), Paraplex® G-60 (Hallstar Company), Disflammol® TOF (Lanxess Deutschland GmbH) und Uniplex® LXS TP ODS (Lanxess Deutschland GmbH).

In der Zusammensetzung kann der Weichmacher bevorzugt in einer Menge von 0,1 bis 40 Gew.-%, stärker bevorzugt 1 bis 35 Gew.-% und noch stärksten bevorzugt 5 bis 25 Gew.-%, bezogen auf die gesamte Zusammensetzung, enthalten sein.

Ferner kann die Zusammensetzung mindestens einen Katalysator oder ein weiteres Vernetzungsmittel enthalten, wobei dieses, sofern vorhanden, reaktionsinhibierend von dem alkoxyfunktionellen Polymer getrennt ist. Durch das Vernetzungsmittel können verschiedene Eigenschaften, wie Haftung zum Untergrund, bessere Benetzung der Additive und Aushärtungsgeschwindigkeit der Zusammensetzung gezielt optimiert und maßgeschneidert werden.

Als Katalysatoren können alle Verbindungen verwendet werden, die geeignet sind, die Bildung der Si-O-Si-Bindungen zwischen den Silan-Gruppen der Polymere zu katalysieren. Beispielhaft können Metallverbindungen, wie Titanverbindungen, Zinnverbindungen erwähnt werden. Alternativ können saure oder basische Katalysatoren erwähnt werden.

Unter den Zinnverbindungen sind Dibutylzinndilaurat, Dibutylzinnmaleat, Dibutylzinndiacetat, Dibutylzinndioctanoat, Dibutylzinnacetylacetonat, Dibutyl zinnoxid, oder entsprechende Verbindungen des Dioctylzinn wie Dioctylzinndilaurat, Zinnnaphthenat Dimethylzinndineododecanoat, Reaktionsprodukte aus Dibutylzinnoxid und Phthalsäureester bevorzugt.

Unter den Aminen sind Triethylamin, Tributylamin, Trioctylamin, Monoethanolamin, Diethanolamin, Triethanolamin, Triisopropanolamin, Tetramethylendiamin, Quadrol, Diethylentriamin, Dimethylanilin, Protonenschwamm, *N*,*N*'-Bis[2-(dimethylamino)ethyl]-*N*,*N*'-dimethylethylendiamin, *N*,*N*-Dimethylcyclohexylamin, *N*-Dimethylphenlyamin, 2-Methylpentamethylenediamin, 2-Methylpentamethylenediamin, 1,1,3,3-Tetramethylguanidin, 1,3-Diphenylguanidin, Benzamidin, *N*-Ethylmorpholin, 2,4,6-Tris(dimethylaminomethyl)phenol (TDMAMP), 1,8-Diazabicyclo[5.4.0]undec-7-en (DBU) und 1,5-Diazabicyclo(4.3.0)non-5-en (DBN); n-Pentylamin, n-Hexylamin, Di-n-propylamin und Ethylendiamin; DABCO, DMAP, PMDETA, Imidazol und 1-Methylimidazol oder Salze aus Aminen und Carbonsäuren und Polyetheramine, wie Polyethermonoamine, Polyetherdiamine oder Polyethertriamine, wie z.B. die Jeffamine von Huntsman und Etheramine, wie z.B. die Jeffkats von Huntsman bevorzugt. In dieser Hinsicht wird Bezug genommen auf die Anmeldungen WO 2011/157562 A1 und WO 2013/003053 A1.

Unter den Titanverbindungen sind Titanatester bevorzugt, wie Tetrabutyltitanat, Tetrapropyltitanat, Tetraisopropyltitanat, Tetraacetylacetonat-titanat.

Unter den Metallverbindungen als Katalysator können ferner Organoaluminiumverbindungen oder Reaktionsprodukte aus Bismutsalzen oder Chelatverbindungen, wie Zirkoniumtetracetylacetonat, erwähnt werden.

Als saure Katalysatoren können Phosphorsäure- bzw. Phosphorsäureester, Toluolsulfonsäuren und Mineralsäuren beispielhaft erwähnt werden.

Als basische Katalysatoren können Lösungen einfacher Basen wie NaOH, KOH, K₂CO₃, Ammoniak, Na₂CO₃, aliphatische Alkoholate oder Phenolate beispielhaft erwähnt werden.

Die Art und die Menge des Katalysators werden abhängig von dem gewählten alkoxysilanfunktionellen Polymer und der gewünschten Reaktivität gewählt.

Um eine vorzeitige Reaktion des alkoxysilanfunktionellen Polymers mit Restfeuchtigkeit aus gegebenenfalls in der Zusammensetzung enthaltenen Bestandteilen, insbesondere Füllstoffen und/oder Additiven, oder der Luftfeuchtigkeit zu verhindern, werden der Zusammensetzung üblicherweise Wasserfänger zugesetzt. Dadurch wird in die Formulierungen eingetragene Feuchtigkeit abgefangen. Bevorzugt ist der Wasserfänger ein organofunktionelles Alkoxysilan oder ein oligomeres organofunktionelles Alkoxysilan, stärker bevorzugt ein vinylfunktionelles Alkoxysilan, ein oligomeres vinylfunktionelles Alkoxysilan, ein vinyl-/alkylfunktionelles Alkoxysilan, ein oligomeres amino-/alkylfunktionelles Alkoxysilan, ein acetoxy-/alkylfunktionelles Alkoxysilan, ein aminofunktionelles Alkoxysilan, ein oligomeres aminfunktionelles Alkoxysilan, ein Carbamatosilan oder ein methacryloxyfunktionelles Alkoxysilan. Am stärksten bevorzugt ist der Wasserfänger Di-*tert*-butoxydiacetoxysilan, Bis(3-triethoxysilylpropyl)amin, Bis(3-trimethoxypropyl)amin, 3-Aminopropylmethyldiethoxysilan, 3-Aminopropyltriethoxysilan, Vinyltriethoxysilan, Vinyltrimethoxysilan, Vinyltris(2-methoxyethoxy)silan, *N-*Cyclohexylaminomethyltriethoxysilan, Vinyldimethoxymethylsilan, Vinyltriacetoxysilan, 3-Methacryloxypropyltrimethoxysilan, Methacryloxymethyl-methyldimethoxysilan, Methacryloxymethyltrimethoxysilan, 3-Methacryloxypropyltriacetoxysilan, *N*-Methyl[3-(Trimethoxysilyl)propyl]carbamat, *N*-Trimethoxysilylmethyl-*O*-methylcarbamat, *N-*Dimethoxy(methyl)silyl-methyl-O-methylcarbamat oder Kombinationen aus diesen.

Kommerziell erhältliche Beispiele hierfür sind: Dynasylan® 1146, Dynasylan® 6490, Dynasylan® 6498, Dynasylan® BDAC, Dynasylan® 1122, Dynasylan® 1124, Dynasylan® 1133, Dynasylan® 1204, Dynasylan® 1505, Dynasylan® 1506, Dynasylan® AMEO, Dynasylan® AMEO-T, Dynasylan® VTEO, Dynasylan® VTMO, Dynasylan® VTMOEO, Dynasylan® 6598 (jeweils der Evonik Industries AG), Geniosil® XL 926, Geniosil® XL 10, Geniosil® XL 12, Geniosil® GF 56, Geniosil® GF 62, Geniosil® GF 31, Geniosil® XL 32, Geniosil® XL 33, Geniosil® GF 39, Geniosil® GF 60, Geniosil® XL 63 und Geniosil® XL 65 (jeweils der Wacker Chemie AG).

Die zugesetzte Menge an Wasserfänger richtet sich nach dem Wassergehalt der Bestandteile der Formulierung, ausgenommen dem extra zugegeben Wasser und liegt üblicherweise im Bereich von ca. 1 Gew. %. Die Wasserfänger können in einer Menge von 0,1 bis 2 Gew.-%, bezogen auf die gesamte Zusammensetzung, bevorzugt von 0,2 bis 2 Gew.-%, stärker bevorzugt von 0,2 bis 1,8 Gew.-% und noch stärker bevorzugt 0,25 bis 1,5 Gew.-%, enthalten sein.

Die Zusammensetzung kann neben den bereits beschriebenen Additiven gegebenenfalls übliche Hilfsmittel wie Netzmittel, etwa auf Basis von Polyacrylaten und/oder Polyphosphaten, Entschäumer, wie Silikonentschäumer, Farbstoffe, Fungizide, oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive, wie Verdicker und/oder Rheologieadditive, sowie Füllstoffe können der Zusammensetzung zugegeben werden. Als Rheologieadditive, wie Anti-Absetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan Gummi.

Die erfindungsgemäße Zusammensetzung kann als Ein-, Zwei- oder Mehrkomponenten-System konfektioniert sein. Ist weder ein Katalysator noch Wasser als Co-Vernetzungsmittel vorhanden, kann die Zusammensetzung als Einkomponenten-System konfektioniert werden. Ist ein Katalysator und/oder Wasser als Co-Vernetzungsmittel vorhanden, ist die Zusammensetzung bevorzugt als Zweikomponenten-System konfektioniert, in dem das alkoxysilanfunktionelle Polymer reaktionsinhibierend getrennt von dem Katalysator und/oder dem Wasser auf zwei Komponenten, Komponente I und Komponente II, aufgeteilt sind.

Die weiteren Bestandteile der Zusammensetzung sind entsprechend ihrer Verträglichkeit untereinander und mit den in der Zusammensetzung enthaltenen Verbindungen aufgeteilt und können in einer der beiden Komponenten oder in beiden Komponenten enthalten sein.

Ferner kann die Aufteilung der weiteren Bestandteile, insbesondere der festen Bestandteile davon abhängen, in welchen Mengen diese in der Zusammensetzung enthalten sein soll. Durch entsprechende Aufteilung kann sich gegebenenfalls ein höherer Anteil, bezogen auf die gesamte Zusammensetzung ergeben.

Das ablativ wirkende Brandschutzadditiv kann dabei als Gesamtmischung oder in Einzelkomponenten aufgeteilt in einer Komponente oder mehreren Komponenten enthalten sein. Die Aufteilung des ablativ wirkenden Brandschutzadditivs erfolgt abhängig von der Verträglichkeit der in der Zusammensetzung enthaltenen Verbindungen, so dass weder eine Reaktion der in der Zusammensetzung enthaltenen Verbindungen untereinander bzw. eine gegenseitige Störung noch eine Reaktion dieser Verbindungen mit den Verbindungen der anderen Bestandteile erfolgen kann. Dies ist von den verwendeten Verbindungen abhängig.

Die Zusammensetzung wird als Paste mit einem Pinsel, einer Rolle oder durch Sprühen auf das Substrat, welches metallisch sein kann, Kunststoff im Fall von Kabeltrassen oder Weichschotts aus Mineralwolle aufgebracht. Bevorzugt wird die Zusammensetzung mittels eines Airless-Sprühverfahrens aufgebracht.

Die erfindungsgemäße Zusammensetzung zeichnet sich, verglichen mit den lösemittel- und wasserbasierten Systemen, durch eine relativ schnelle Aushärtung durch eine Additionsreaktion und damit nicht notwendige physikalische Trocknung aus. Dies ist insbesondere dann sehr wichtig, wenn die beschichteten Bauteile schnell belastet bzw. weiterverarbeitet werden müssen, sei es durch Beschichtung mit einer Deckschicht oder ein Bewegen oder Transportieren der Bauteile. Auch ist die Beschichtung somit deutlich weniger anfällig gegenüber äußeren Einflüssen auf der Baustelle, wie z.B. Beaufschlagung mit (Regen)-wasser oder Staub und Schmutz, was in lösemittel- oder wasserbasierten Systemen zu einem Auswaschen von wasserlöslichen Bestandteilen führen kann, bzw. bei der Aufnahme von Staub zu einer reduzierten ablativen Wirkung. Durch die geringe Viskosität der Zusammensetzung trotz des hohen Feststoffanteils, der ohne die Zugabe leicht flüchtiger Lösemittel bis zu 99 Gew.-% in der Zusammensetzung betragen kann, bleibt die Zusammensetzung einfach zu verarbeiten, insbesondere durch gängige Sprühverfahren.

Deshalb ist die erfindungsgemäße Zusammensetzung insbesondere als Brandschutzbeschichtung, insbesondere sprühbare Beschichtung für Bauteile auf metallischer und nicht metallischer Basis geeignet. Die erfindungsgemäße Zusammensetzung findet vor allem im Baubereich als Beschichtung, insbesondere Brandschutzbeschichtung für einzelne Kabel, Kabelbündel, Kabeltrassen und Kabelkanäle oder andere Leitungen Verwendung sowie als Brandschutzbeschichtung für Stahlkonstruktionselemente, aber auch für Konstruktionselemente aus anderen Materialien, wie Beton oder Holz.

Ein weiterer Gegenstand der Erfindung ist daher die Verwendung der erfindungsgemäßen Zusammensetzung als Beschichtung, insbesondere als Beschichtung für Konstruktionselemente oder Bauelemente aus Stahl, Beton, Holz und anderen Materialien, wie etwa Kunststoffen, insbesondere als Brandschutzbeschichtung für einzelne Kabel, Kabelbündel, Kabeltrassen und Kabelkanäle oder andere Leitungen oder Weichschotts.

Die vorliegende Erfindung betrifft auch Objekte, die erhalten werden, wenn die erfindungsgemäße Zusammensetzung ausgehärtet ist. Die Objekte haben ausgezeichnete ablative Eigenschaften.

Die folgenden Beispiele dienen der weiteren Erläuterung der Erfindung.

### AUSFÜHRUNGSBEISPIELE

Für die Herstellung von erfindungsgemäßen ablativ wirkenden Zusammensetzungen verwendet man die nachfolgend aufgelisteten Bestandteile. Es werden jeweils die Einzelkomponenten mit Hilfe eines Dissolvers vermengt und homogenisiert. Für die Anwendung werden diese Mischungen dann entweder vor dem Versprühen oder während des Versprühens vermischt und appliziert.

Zur Bestimmung der Brandschutzeigenschaften wurde die ausgehärtete Zusammensetzung einer Prüfung nach EN ISO 11925-2 unterzogen. Die Prüfung erfolgt in einem zugfrei aufgestellten Brennkasten Mitsubishi FR-D700SC Electric Inverter. Bei der Prüfung wird im Winkel von 45° eine Kleinbrennerflamme für 30 s auf die Probenoberfläche gerichtet, dies entspricht einer Flächenbeflammung.

Es werden jeweils Proben mit den Abmessungen 11 cm x 29,5 cm und einer Anwendungsdicke von 1 mm verwendet. Diese Proben härteten bei Raumtemperatur aus und wurden drei Tage bei 40°C gealtert.

Nach der Alterung von drei Tagen bei 40°C erfolgt die Überprüfung von Entzündlichkeit und Höhe der angegriffenen Fläche.

Die Aushärtungszeit und der Aushärtungsverlauf wurden bestimmt. Dabei wurde mit einem Spatel getestet, wann die Aushärtung der Beschichtung startet.

Für die folgenden Beispiele 1 bis 3 wurde als Bestandteil C Aluminiumtrihydrat (HN 434 der J.M. Huber Corporation, Finnland) verwendet, wobei jeweils 15 g davon verwendet wurden.

### Beispiel 1

### Bestandteil A

| **Bestandteil** | **Menge [g]** |
|---|---|
| Geniosil XB 502 ¹⁾ | 57,8 |
| Geniosil XL 10 ²⁾ | 2,5 |
| Calciumcarbonat | 60 |
| Exolit AP 755 ³⁾ | 10,5 |
| Dynasylan AMMO ⁴⁾ | 3,4 |

| | |
|---|---|
| 1) silanterminiertes Bindemittel auf Basis der α-Silan-Technologie (Viskosität bei 25°C 1700-3400 mPas (Brookfield, Spindel 2, 2,5 UpM); dynamische Viskosität bei 25°C (DIN 51562) 2400 mPas ²⁾ Trimethoxyvinylsilan 3) halogenfreies Ammoniumpolyphosphat 4) 3-Aminopropyltrimethoxysilan | |

### Bestandteil B

| **Bestandteil** | **Menge [g]** |
|---|---|
| Wasser | 0,9 |

### Beispiel 2

### Bestandteil A

| **Bestandteil** | **Menge [g]** |
|---|---|
| Geniosil XB 502 | 57,9 |
| Geniosil XL 10 | 2,5 |
| Calciumcarbonat | 60 |
| Exolit OP 935 ⁵⁾ | 10,7 |
| Dynasylan AMMO | 3,4 |

| | |
|---|---|
| ⁵⁾ organisches Phosphinat | |

### Bestandteil B

| **Bestandteil** | **Menge [g]** |
|---|---|
| Wasser | 1,0 |

### Beispiel 3

### Bestandteil A

| **Bestandteil** | **Menge [g]** |
|---|---|
| Geniosil STP-E 10 ⁶⁾ | 59,3 |
| Geniosil XL 10 | 2,7 |
| Calciumcarbonat | 60 |
| Exolit AP 760 ⁷⁾ | 10,7 |
| Dynasylan AMEO ⁸⁾ | 2,3 |

| | |
|---|---|
| 6) Dimethoxy(methyl)silylmethylcarbamate-terminierter Polyether 7) halogenfreies Ammoniumpolyphosphat 8) 3-Aminopropyltriethoxysilan | |

### Bestandteil B

| **Bestandteil** | **Menge [g]** |
|---|---|
| Wasser | 0,9 |

### Vergleichsbeispiel 1

Als Vergleich diente ein auf wässriger Dispersionstechnologie (Acrylatdispersion) basiertes kommerzielles Brandschutzprodukt (Hilti CFP SP-WB).

**Tabelle 1: Ergebnisse der Bestimmung der Aushärtungszeit, der Entzündung und der Flammenhöhe**

| **Beispiel** | **1** | **2** | **3** | **Vergleich 1** |
|---|---|---|---|---|
| Aushärtungszeit | < 2 h | < 2 h | < 2 h | 24 h |
| Entzündung | nein | nein | nein | ja |
| Flammenhöhe | 35 mm | 45 mm | 45 mm | 150 mm |

## Patentansprüche

1. Brandschutz-Zusammensetzung mit einem alkoxysilanfunktionellen Polymer, welches terminiert und/oder als Seitengruppen entlang der Polymerkette alkoxyfunktionelle Silangruppen der allgemeinen Formel (I) enthält
-Si(R¹)ₘ(OR²)₃₋ₘ (I),
worin R¹ für einen linearen oder verzweigten C₁-C₁₆-Alkylrest, R² für einen linearen oder verzweigten C₁-C₆-Alkylrest und m für eine ganze Zahl von 0 bis 2 steht, und mit mindestens einem ablativ wirkenden Brandschutzadditiv.

2. Zusammensetzung nach Anspruch 1, wobei das Polymer ein Grundgerüst umfasst, das aus der Gruppe, bestehend aus einem Polyether, Polyester, Polyetherester, Polyamid, Polyurethan, Polyesterurethan, Polyetherurethan, Polyetheresterurethan, Polyamidurethan, Polyharnstoff, Polyamin, Polycarbonat, Polyvinylester, Polyacrylat, Polyolefin, Polyisobutylen, Polysulfid, Kautschuk, Neopren, Phenolharz, Epoxidharz und Melamin, ausgewählt ist.

3. Zusammensetzung nach einem der vorhergehenden Ansprüche, wobei das alkoxysilanfunktionelle Polymer mindestens 2 alkoxyfunktionelle Silangruppen trägt.

4. Zusammensetzung nach Anspruch 4, wobei das alkoxysilanfunktionelle Polymer 2 bis 8 alkoxyfunktionelle Silangruppen trägt.

5. Zusammensetzung nach Anspruch 3 oder 4, wobei der Gehalt an Alkoxygruppen des Polymers 0,20 bis 0,85 mmol/g beträgt.

6. Zusammensetzung nach einem der vorhergehenden Ansprüche, wobei der Gehalt an Wasser in der Zusammensetzung bis zu 3 Gew.-% bezogen auf das Polymer beträgt.

7. Zusammensetzung nach einem der vorhergehenden Ansprüche, wobei das wenigstens eine ablativ wirkende Brandschutzadditiv aus der Gruppe ausgewählt ist, bestehend aus LiNO₃·3H₂O, Na2CO3H2O (Thermonatrit), Na₂CO₃·7H₂O, Na₂CO₃·10H₂O (Soda), Na₂Ca(CO₃)₂·2H₂O (Pirssonit), Na₂Ca(CO₃)₂·5H₂O (Gaylussit), Na(HCO₃)Na₂CO₃·2H₂O (Trona), Na₂S₂O₃·5H₂O, Na₂O₃Si·5H₂O, KF·2H₂O, CaBr₂·2H₂O, CaBr₂·6H₂O, CaSO₄·2H₂O (Gips), Ca(SO₄)·½H₂O (Bassanit), Ba(OH)₂·8H₂O, Ni(NO₃)₂·6H₂O, Ni(NO₃)₂·4H₂O, Ni(NO₃)₂·2H₂O, Zn(NO₃)₂·4H₂O, Zn(NO₃)₂·6H₂O, (ZnO)₂(B₂O₃)₂·3H₂O, Mg(NO₃)₂·6H₂O (US 5985013 A), MgSO₄·7H₂O (EP1069172A), Mg(OH)₂, Al(OH)₃, Al(OH)₃·3H₂O, AIOOH (Böhmit), Al₂[SO₄]₃·nH₂O mit n = 14 - 18 (US 4,462,831 B), gegebenenfalls im Gemisch mit AlNH₄(SO₄)₂·12H₂O (US5104917A), KAl(SO₄)₂·12H₂O (EP1069172A), CaO·Al₂O₃·10H₂O (Nesquehonit), MgCO₃·3H₂O (Wermlandit), Ca₂Mg₁₄(Al,Fe)₄CO₃(OH)₄₂·29H₂O (Thaumasit), Ca₃Si(OH)₆(SO₄)(CO₃)·12H₂O (Artinit), Mg₂(OH)₂CO₃·H₂O (Ettringit), 3CaO·Al₂O₃·3CaSO₄·32H₂O (Hydromagnesit), Mg₅(OH)₂(CO₃)₄·4H₂O (Hydrocalumit), Ca₄Al₂(OH)₁₄·6H₂O (Hydrotalkit), Mg₆Al₂(OH)₁₆CO₃·4H₂O Alumohydrocalcit, CaAl₂(OH)₄(CO₃)₂·3H₂O Scarbroit, Al₁₄(CO₃)₃(OH)₃₆ Hydrogranat, 3CaO·Al₂O₃·6H₂O Dawsonit, NaAl(OH)CO₃, wasserhaltige Zeolithe, Vermikulite, Colemanit, Perlite, Glimmer, Alkalisilikate, Borax, modifizierten Kohlen, Graphiten, Kieselsäuren und Gemischen davon.

8. Zusammensetzung nach einem der vorhergehenden Ansprüche, wobei die Zusammensetzung ferner mindestens ein Vernetzungsmittel enthält.

9. Zusammensetzung nach Anspruch 8, wobei die Zusammensetzung ferner ein Co-Vernetzungsmittel enthält.

10. Zusammensetzung nach Anspruch 9 wobei das Co-Vernetzungsmittel Wasser ist.

11. Zusammensetzung nach einem der vorhergehenden Ansprüche, wobei die Zusammensetzung ferner organische und/oder anorganische und/oder weitere Additive enthält.

12. Zusammensetzung nach einem der vorhergehenden Ansprüche, wobei die Zusammensetzung als Zwei- oder Mehrkomponenten-System konfektioniert ist.

13. Verwendung der Zusammensetzung nach einem der Ansprüche 1 bis 12 als Beschichtung.

14. Verwendung nach Anspruch 13 für die Beschichtung von Konstruktionselementen.

15. Verwendung nach Anspruch 13 für die Beschichtung von nicht metallischen Bauteilen.

16. Verwendung nach einem der Ansprüche 13 bis 15 als Brandschutzschicht insbesondere für einzelne Kabel, Kabelbündel, Kabeltrassen und Kabelkanäle oder andere Leitungen oder Weichschotts.

17. Gehärtete Objekte, erhalten durch Härten der Zusammensetzung nach einem der Ansprüche 1 bis 12.
